# EUROPEAN PATENT APPLICATION

(11) **EP 3 361 195 A1**
(43) Date of publication of application: **15.08.2018**
(21) Application number: 18000020.0
(22) Date of filing: 12.01.2018
(51) Int. Cl.: F25D 31/00, A47J 39/00, A23L 3/365, A21C 13/00

(54) **MULTI-CYCLE TREATMENT METHOD FOR FOODSTUFFS**

(30) Priority: 20.01.2017 IT 201700006057
(71) Applicant: ALI S.p.A.-DIV. FRIULINOX, 20123 Milano (MI) (IT)
(72) Inventor: Imazio, Oscar, I-31020 S.Pietro DI Feletto (TV) (IT); Filippetto, Federico, I-33084 Cordenons (PN) (IT)
(74) Representative: Osti, Biancamaria

(57) **Abstract**

Multi-cycle treatment method (10) for foodstuffs in a multi-purpose apparatus, ensuring food safety, with at least: a Phase A (101) of initial setting of the sequence of cycles (111-114), a Phase B (102) of automatic control with sequence compensation, a Phase C (103) of automatic execution, a Phase D (104) of final collection of the ready food. In particular, said Phase B provides the check of duration and, if adequate, the processing of a compensated sequence wherein, in addition to the cycles set by the user, before the last cycle, a compensation period (115) is automatically included, with the food being kept at a temperature lower than or equal to 10°C, for the purpose of optimal preservation; in the Phase C the control system executes said compensated sequence of the treatment cycles, without user intervention, safely supplying the food ready to be collected, at the set time and under the desired conditions of use.

## Description

The present invention relates to a multi-cycle treatment method for foodstuffs.

### Field of the invention

The invention relates to an advantageous multi-cycle treatment method, otherwise known as multiple-cycle method or method with a sequence of cycles, which can be implemented by means of a modern multi-purpose apparatus for the treatment of foodstuffs, particularly in the context of the services for the community; in particular, reference is made to the professional foodservice industry, where the operators avail themselves of more or less complex equipment, aimed at achieving a specific purpose, such as the functions of cooking, preservation and blast chilling, and where such functions are sometimes integrated in the same apparatus, which is thus of the multi-purpose type.

The foodservice industry, especially in the last twenty years, has undergone significant changes; in particular, a greater closeness and correlation between said main functions has been noted, wherein in a kitchen environment, the traditional cooking equipment, such as gas ovens, electric ovens, mixed ovens or convection/steam ovens, is combined with negative temperature preservation equipment, such as freezers as well as the modern blast chillers.

The need to use several apparatuses simultaneously, each of which has its own function, in one single environment to suit the versatile requirements of kitchen operators, not excluding planning, and above all for the purpose of preserving as much possible the original organoleptic characteristics of foodstuffs, put in relation to time availability and to the serving mode, has given rise to a non-negligible problem, that is to say, the impact on space. To this one should add the costs, which have grown significantly, to equip or renovate a professional kitchen.

Recently, in such a complex context, there has been a progressive combination of several functions into single apparatuses.
In the beginning this phenomenon was observed in cooking equipment, whose different declinations were joined in one single apparatus able to concentrate different cooking modes, for example of the electric type and/or with the gas function and/or with the steam and/or microwave function, up to the smoking function, as well as other variants and combinations. This, on the one hand, surely allowed cooks to experiment their own dishes with different cooking modes by using an oven that integrates multiple functions, with a reasonable reduction in overall dimensions, costs and, in conclusion, with greater overall usefulness.

The same phenomenon was substantially found in the sector of refrigeration equipment, for example with the apparatuses called blast chillers/freezers. Blast chillers substantially are recent machines deriving from the more traditional freezers, which have the essential purpose of cooling cooked food as quickly as possible to a temperature of about +3°C, otherwise called blast chilling or more precisely positive chilling. The user introduces into the treatment chamber the just cooked food, for example at +90°C, and in a short time the temperature at the core of the food itself is brought to +3°C following a precise treatment cycle set by the user by acting on the machine program. Professional freezers, on the other hand, are apparatuses that allow to bring the food from a temperature close to room temperature of at least 18°C up to -40°C and beyond; if this temperature reduction is sudden, said function is sometimes called negative chilling. Nowadays, the interaction between said blast chilling and freezing functions, where one enables the preservation of food up to a maximum of about 5 days, and the other, on the other hand, up to a maximum of about 6 months or 1 year, in planning in the foodservice industry has seen the imposition of machines that perform, as said above, both functions rather than two distinct machines.

In principle, a significant progress in cooking techniques was brought about, among the other things, by the so-called Cook-Chill system, which requires the concurrence of different apparatuses specifically designed to perform some functions such as, in particular, cooking and immediate chilling. So, traditional ovens and refrigerators have been joined by the more recent blast chillers and recently, for example, by regeneration apparatuses. Conventionally, the Cook-Chill phases are the following: storage of raw materials, preparation, cooking, blast chilling, portioning, preservation, transport, regeneration and consumption.

Regardless of the adopted method of preparation, preservation and transport, the regeneration of cooked food requires the cold food, before being regenerated, to be kept at a temperature of about + 5°C to be then submitted to a regeneration cycle. The regeneration phase, which thus precedes serving, should then be carried out in less than one hour allowing to reach a temperature of at least 65°C at the core of the product, in such a way as to be maintained until the moment of consumption, which should take place at most within two hours from the start of the regeneration.

Knowing the Cook-Chill treatment technique, for example, it can be correctly stated that some companies of the sector, in the foodservice industry, operated in such a way as to obtain the concurrence of two apparatuses intended to complete the regeneration cycle, respectively a food refrigeration and preservation unit, upstream of the cycle, and a downstream regeneration unit before serving. It goes without saying that the main and intuitive problem is given by the substantial need to transfer the foodstuffs from the refrigeration unit to the regeneration unit, a condition that in principle can modify, that is to say, alter, the chemical-bacteriological, as well as organoleptic, characteristics of food, and last but not least be a costly operation in terms of time and resources, with evident costs for the company dedicated to the supply of the foodstuffs. Hence the need to integrate in one single apparatus multiple generic thermal treatment functions, both of heating or cooking and of cooling or refrigeration; moreover, the need to also integrate therein an effective solution for the control of the humidity of the product during the single thermal treatments is known; hence the need to control and effectively adjust such an integration in such a way as to facilitate professional practice and preserve the quality of food.

Furthermore, as to the technical complexity in the management of a treatment, in modern professional practice it is sometimes provided to subdivide the single cycle into diversified steps; by way of example only, one should consider retarder proving, that is to say, the stopping or slowing down of the fermentative activity of yeast. Nowadays it is used for bread and pastry doughs through the management of temperature, of humidity and of time, with variable intervals. This allows to improve the quality of the product and to eliminate the bakers' night work; in fact, the doughs are prepared during the day and, once ready, they are introduced into the retarder proofer and, by means of specific programming, leavening is blocked until the time when one wishes to put the bread into the oven. Said automatic retarder proving cycle thus preferably consists of five operating steps, like cycle phases connected to each other in a cascade, with differentiated levels of temperature, relative humidity and duration. In general, there is provided a first block step, that is used to block the yeasts contained in the prepared dough, in such a way as to retard leavening; then a second preservation step, which is used to preserve the dough at a temperature such as not to be frozen but that at the same time does not awake the yeasts, waiting for the awakening phase preceding leavening; a third awakening step is used to raise the temperature in the cell awakening the yeasts of the dough, thus obtaining a pre-leavening. A fourth leavening step is then used to complete the leavening of the dough in such a way as to make it ready to be put into the oven on the day and at the time established by the final user; finally, a fifth baking retarding step is used to keep the dough leavened waiting for it to be taken and put into the oven for baking, this step being always provided but also being able to be disabled by the user.

From everything stated above, therefore, it is possible to infer the importance of managing the single steps of every single cycle of treatment as, in particular, in retarder proving or in slow cooking or in blast chilling or controlled defrosting or even regeneration. It was furthermore noted that, nowadays, in the professional sector, there is the need to concatenate to each other more than one single cycle of treatment, as well as to program the related steps, according to particular aims. As a non-exhaustive example, the following case should be remembered: initial defrosting of a foodstuff, its cooking, positive chilling to preserve it until the moment of use, and finally its regeneration to the conditions of serving; this case, in fact, is frequent and involves each time the planning and the start of the single cycle by the operator.

In general, nowadays, many companies propose evolved solutions of multi-purpose equipment for professional use; among them, for example, one should remember the blast chiller commercially called HI5 by the Italian company Ali s.p.a. / Friulinox, 33083 Taiedo di Chions PN, which can be seen at the address www.friulinox.com, or also the blast chiller called MultiFresh by the Italian company Irinox S.p.a. 31020 Corbanese di Tarzo TV, which can be seen at the address www.irinoxprofessional.com. Furthermore, one should remember some solutions of multi-purpose equipment with particular humidification systems as, for example, in ITTV2015A0006 (Filippetto et al.), ITTV2015U0001 (Filippetto et al.) or ITTV2015U0002 (Filippetto et al.). However, the known and conventional solutions do not carry out in a complete and automatic way, or without the operator's intervention, multiple and complex treatments of food which provide, in addition to cooking, safe preservation, preserving its qualities, as well as regeneration exactly at the time of collection and under the conditions of use.

### Prior art

A search, although not in depth, in patent literature, keeping the described technical sector of reference into consideration, allowed to find at least the following relevant prior art documents:
D1 US4884626A (Filipowski)
D2 GB1274502 (Universal Oil)
D3 EP0092537 A1 (Rostfria AB)
D4 US4850204 A (Bos et al.)
D5 Irinox EP2683249 (Tonon et al.)
D6 Moduline WO2013110996 (Lazzer)
D7 Friulinox ITTV2015A0006 (Filippetto et al.)
D1 describes a refrigerator-oven for refrigerating and cooking food in the same enclosed chamber. It comprises both heating elements and cooling elements located in the same appliance. The heating elements may be conventional heating elements and/or a convection unit and/or a microwave unit. Additionally, the apparatus has cooling controls, heating controls, and temperature controls which are activated by a microprocessor, programmable for up to two weeks in advance, so that the cooling elements and the heating elements are subsequently activated to treat the food at particular temperatures for particular specific periods of time. The sequence of heating and cooling may be performed in any desired order. The apparatus includes a battery backup to maintain the time, microprocessor and logic circuits during a power outage and utilizes a frozen food, probe-receiving sheath to facilitate cooking from a frozen state.
D2 is a combined apparatus for the maintenance of cold and the regeneration of food for the foodservice industry. It provides a chamber for the processing of food introduced through an openable door, which comprises, integrated in a piece of furniture, a first heating unit of said processing chamber, and a second cooling unit of the same processing chamber, wherein said apparatus for processing food has a logic unit for the control of the functions of said first and second unit, wherein the processing chamber comprises a technical space in communication with the food housing space, said technical space with at least one fan means, internal with respect to a resistor that surrounds it perimetrically, and with a heat exchange wall with respect to which said fan means is centrally arranged.
D3 proposes a multi-purpose apparatus for the preservation and treatment of foodstuffs, of the closed cupboard type having doors, which comprises a fan with air intakes, a cooling assembly, a heating assembly, a flow regulator, an electronic control unit; said control unit automatically manages the cooling, the heating and the humidity in the cell, also in a variable way depending on predetermined or detected parameters, a damper device with a hygrometer being connected to said control unit.
D4 describes an automatic defrost system wherein an evaporator coil defrost cycle is adaptively modified in response to changing environmental conditions, also depending on the time detected for the elimination of the frost accumulation.
D5 proposes a method for treating food, comprising the following operating steps: a step a) of preparing a closed chamber destined to receive the food to be treated inside it, cold generating means comprising a refrigerator circuit provided with at least one evaporator, heat generating means and ventilation means able to generate a circulation of air affecting the chamber, the evaporator and the heat generating means, being associated with the chamber; at least one step b) of thermally treating the food inside the chamber supplying heat in a controlled manner so as to keep the air temperature of the chamber within a predefined value range, alternating, with or without intermediate interruptions, sub-steps b1) of supplying heat, in which the heat generating means and ventilation means are simultaneously operative, with sub-steps b2) of removing heat in which the cold generating means and ventilation means are simultaneously operative, depending on the course of the real temperature in the chamber in relation to said predefined value range.
D6 describes a combined apparatus for treating foodstuffs by means of heat and cold in the same cell, comprising a processing system with a logic unit that controls the various treatment cycles, wherein from a main interface menu one selects the cold maintenance function and the related temperature, from a minimum value of 0°C to a maximum value of 30°C, or, as an alternative, one selects the regeneration function; in particular, the combination of said two functions is also provided, wherein, after setting said cold maintenance cycle and the related temperature, one sets the date and time of end of the cycle in such a way as to automatically start a following regeneration cycle.
D7 proposes a multi-purpose apparatus for treating food in a treatment chamber that comprises a first heating unit and a second cooling and refrigeration unit of the same chamber, said second unit being integrated in a technical compartment; the apparatus comprises a logic unit for the control and the interaction of each function in such a way as to enable in said chamber, by controlling the degree of humidity, positive and negative temperature chilling, retarder proving, defrosting, cooking and regeneration, that is to say, reconstitution, respectively. Said apparatus is provided with means intended to spray a certain quantity of water for the control of humidity inside said treatment chamber, with controlled and automatic emptying as well, in order to avoid freezing and for hygiene; said apparatus being also provided with means intended to perform the function of automatic defrosting of the frosted evaporator, with the product in the cell, also of the hot gas type.

Therefore, in view of the above, it is reasonable to consider as known an apparatus for treating food with a food treatment chamber for treating foodstuffs introduced through an openable door, generally vertically hinged in correspondence of the front face of the apparatus, which is provided with an opening closable by means of said openable door, wherein said apparatus, adjacent to the food treatment chamber, comprises a technical compartment that integrates a first heating unit of said treatment chamber, and a second refrigeration unit of the same treatment chamber, said apparatus for treating food being provided with a logic unit for the control and the interaction of each of the functions of said first and second units in such a way as to enable, in the food treatment chamber, by controlling its degree of humidity, respectively: cooling and blast chilling, as well as heating and/or cooking and/or retarder proving and/or defrosting and/or regeneration.

### Drawbacks

In principle, it may be agreed that the known apparatuses and the related methods of use, as for example in D1-D7, allow to program in detail only part of treatments generally provided on the same foodstuff, in sequence and at different times, also alternated according to the working activity, in order to prepare it and make it available at the moment of use, as for example occurs when serving it at the table, it being anyway necessary for the operator to intervene during the execution of said sequence to handle the product and/or to re-program the single cycle, guaranteeing the safety and quality thereof. In fact, there is no effective and safe method for carrying out multiple and complex treatments of food, in a complete and automatic way as it is currently required and desirable in the professional sector, particularly in a number of at least three cycles different with respect to each other and concatenated in sequence, in such a way as to obtain a ready-for-use foodstuff without the operator's intervention, exactly at the time planned for collection and under the optimal conditions of use, ensuring food safety also when the different cycles, which individually make up the treatment, are spaced in time by several hours or days with respect to each other.

Another drawback, linked to the first one, concerns the fact that there is no known control system with a logic unit able to advantageously concatenate more than two single treatments and there is no known method intended to compensate for the period of time between the different cycles, in such a way as to preserve the quality of food and to ensure food safety.

A further drawback lies in the fact that by the known treatment methods, which provide multiple cycles in sequence, also at different times, the professional operator is subjected to frequent distractions, with the possibility to wrongly program the single treatment, as well as to trigger dangerous bacterial proliferation or to degrade the quality of the product if the preservation in the period of time between the different cycles is not optimal. Nowadays, in fact, in order to overcome this problem, sometimes it is necessary to simultaneously carry out multiple operations and not to distribute them in the course of time, for the purpose of a better planning of the operations in the professional sector.

Considering these aspects, too, there is an evident need for the companies of the sector to find more efficient and practical solutions, able to facilitate professional activity and to ensure better food safety, and which are also advantageous in terms of cost-effectiveness, without jeopardizing the qualitative characteristics of the so treated products.

### Short description of the invention

The present invention relates to a multi-cycle treatment method (10) for foodstuffs in a multi-purpose apparatus, ensuring food safety, with at least: a Phase A (101) of initial setting of the sequence of cycles (111-114), a Phase B (102) of automatic control with compensation of the sequence, a Phase C (103) of automatic execution, a Phase D (104) of final collection of the ready food. In particular, said Phase B provides the check of duration and, if adequate, the processing of a compensated sequence wherein, in addition to the cycles set by the user, before the last cycle, a compensation period (115) is automatically included, with the food kept at a temperature lower than or equal to 10°C, for the purpose of optimal preservation; in the Phase C the control system executes said compensated sequence of the treatment cycles, without user intervention, safely supplying the food ready to be collected, at the pre-set time and under the desired conditions of use.

### Aims and advantages

The above-mentioned solution offers countless aims and advantages, which are not to be considered as limitative, it being possible to find others hereinafter, which, although not mentioned, must be included in any case.

A first aim and advantage of the present invention consists in allowing to carry out in a complete and automatic way multiple and complex treatments of food, particularly in a number of at least three or more cycles different with respect to each other, concatenated in sequence, in such a way as to obtain a ready-for-use foodstuff without user intervention, exactly at the moment planned for collection and under the optimal conditions of use, ensuring food safety also when the different cycles, which individually make up the treatment, are spaced in time by several hours or days with respect to each other.

A second aim and advantage of the present invention consists in concatenating multiple single treatments also compensating for the period of time between the different cycles, in such a way as to preserve the quality of food and to ensure food safety; for example, the invention provides a complete and automatic treatment of a frozen meat or fish portion, which is thus defrosted and slow cooked and then preserved under maximum quality and safety conditions up to the final reconstitution, exactly at the time of collection and under the desired conditions of use.

A third aim and advantage of the present invention consists in reducing the occasions of distraction for the professional operator, thus limiting the possibility to wrongly program the single treatment, as well as to trigger dangerous bacterial proliferation or to degrade the quality of the product if the preservation in the period of time between the different cycles is not optimal. As a consequence, the invention enables a better planning of the activities in a kitchen. Finally, the proposed method provides the non-negligible advantage of being particularly effective and economical, and also implementable in already existing equipment by adapting the control system and/or the logic unit.

These and other aims and advantages will appear from the following detailed description of some embodiments with the aid of the enclosed drawings, whose details of execution are not to be considered limitative but only illustrative.

### Content of the drawings

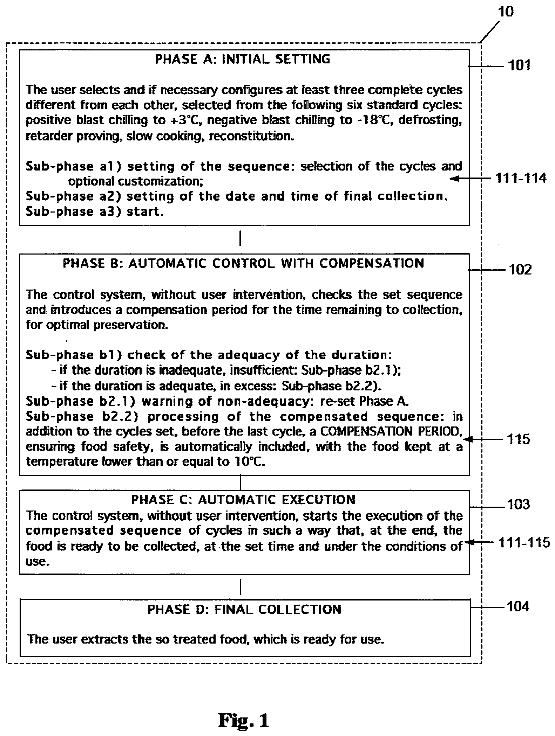

Figure 1 schematically shows the phases of the multi-cycle treatment method according to the present invention.

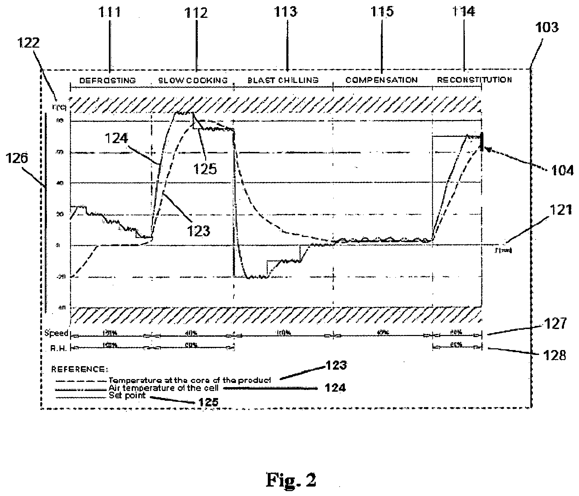

Figure 2 is a two-dimensional diagram on Cartesian axes, function of time and temperature, respectively, which shows an example of the compensated sequence as provided by the invention; in particular, the example refers to an embodiment variant suitable to treat a meat or fish portion with four single cycles initially set by the user, among which a slow cooking cycle, wherein, before the final reconstitution, a duration compensation period at about +3°C, ensuring food safety, is automatically included.

### Practical realization of the invention

With reference to the schematic figures (Figs. 1 and 2) as well, the present invention proposes an advantageous multi-cycle treatment method (10) for foodstuffs, otherwise known as multiple-cycle method, in a treatment chamber or cell of a multi-purpose apparatus intended for the thermal treatment of food, ensuring food safety, with a temperature at least between -40°C and +85°C and also with the adjustment of humidity between 0% and 100%. The invention provides the use of a modern multi-purpose apparatus for the foodservice industry, of the type simultaneously comprising a first heating unit and a second cooling and refrigeration unit of said treatment chamber, provided with a control system with a logic unit for the management and the interaction of each of the functions of said first and second units in such a way as to enable in said treatment chamber, by controlling the degree of humidity as well, single treatment cycles such as: positive and negative temperature chilling, retarder proving, defrosting, slow cooking, reconstitution; each cycle is of the programmable type, that is to say, it is set in a standard way or is modifiable depending on temperature and/or on duration and/or on humidity.

Particularly suitable for the invention are the evolved control solutions in which a two-dimensional diagram, which is a function of duration and temperature and is also subdivided into single steps or cycle phases, being particularly suitable for the fine adjustment of the single ramps, that is to say, of the incremental progression of variations in duration and/or temperature and/or humidity for each single treatment cycle, appears in a graphic interface display. In fact, professional operators know that every single treatment cycle, such as slow cooking or retarder proving or blast chilling, can be, in its turn, individually subdivided into multiple steps in order to obtain an optimal result, wherein for each of them said diagram is variable and programmable with diversified ramps. By way of example only, among the known multi-purpose apparatuses available on the market of professional cooking appliances, reference is made to a multifunction apparatus with a single treatment chamber, with diversified cycles and humidity control, preferably provided with a graphic interface display, such as the multifunction blast chiller commercially called HI5 by said Italian company Ali s.p.a. Div. Friulinox, which has an embodiment configuration and a control logic adaptable to the invention.

Therefore, conventionally, in the following description of the proposed method (10), by the term multi-cycle one means: with multiple cycles, that is to say, consisting of at least three single treatment cycles; moreover, by the term Phase one means: each of the four main operating phases constituting said method (10), that is to say, Phase A (101), Phase B (102), Phase C (103) and Phase D (104), which in their turn are subdivided into Sub-phases. By the term step, on the other hand, one means: the minimum subdivision unit of every single treatment cycle, which is programmable like a variable ramp or interval.

In more detail as to the proposed treatment method (10), it is of the multi-cycle type, being intended to concatenate in sequence at least three different cycles in such a way as to automatically carry out, while ensuring food safety, an optimal and complete treatment of food, it being also of the complex type as it often occurs in modern professional practice; the described solution prevents the operator from interrupting the activity in progress and/or from being distracted making mistakes, considerably facilitating the job and increasing food safety, that is to say, reducing the known risks of bacterial proliferation and/or degradation of the quality of the product. In particular, it was noted that the proposed method is very versatile, adapting itself to the various activities and requirements of professional practice, solving the known problems of the sector. As a non-exhaustive example, the invention allows to sequentially - and without user intervention - defrost the foodstuff, slow cook it, and then blast chill it keeping it under the optimal preservation conditions until the final regeneration, which will take place exactly at the time of collection, that is to say, at the moment planned for the extraction from the treatment chamber, under the desired conditions, such as the serving at the table.

Therefore, to this purpose, the multi-cycle treatment method (10) according to the present invention provides four main phases (Fig. 1): a Phase A (101) of initial setting, a Phase B (102) of automatic control with compensation, a Phase C (103) of automatic execution, a Phase D (104) of final collection of the food; said method appropriately including in the sequence of the set cycles a compensation period for the purpose of the final collection and of food safety and quality, that is to say, processing and automatically executing a compensated sequence of the treatment cycles set by the user.

In said Phase A (101), the user sets the sequence of the single cycles intended to carry out the desired multi-cycle treatment for the foodstuff inserted into the cell of said multi-purpose apparatus, by acting on its control system, for example by means of said graphic interface display. Said single cycles being independent of each other but concatenated according to the final collection, as provided by the invention and hereinafter described.

Said Phase A (101) includes three Sub-phases: a first Sub-phase a1) of setting of the single cycles, wherein the user selects and if necessary configures each cycle and/or cycle phase, in sequence, for a total of at least three complete cycles different from each other, selected from the following six standard cycles: positive blast chilling to about +3°C, negative blast chilling to about -18°C, defrosting, retarder proving, slow cooking, reconstitution, that is to say, regeneration, or particular conditions of use, as it occurs for a foodstuff ready to be used or served at the table. Each selected cycle and/or cycle portion is then configurable, that is to say, it can be customized according to duration, temperature, which is at least in the operating range between -40°C and +85°C, and humidity between 0% and 100%; such programming occurs at regular intervals, such as of 20 percentage points. Said Sub-phase a1) provides: at least the selection of the first cycle (111) or Cycle1 and its optional customization, at least the selection of the second cycle (112) or Cycle2 and its optional customization, at least the selection of the third cycle (113) or Cycle3 and its optional customization. Any subsequent cycles, if provided, are thus likewise selectable and customizable; in particular, it is provided that the last cycle (114) set prepares the food to the desired conditions of use, at the time of collection. Then there is a second Sub-phase a2) of setting of the date and time of the final collection, and then a third Sub-phase a3) of start of said multi-cycle treatment, which will then be executed automatically.

In said Phase B (102) the control system of the apparatus, without user intervention, checks the total duration of the treatment with respect to the actually available time, that is to say, it controls that it is longer than the sum of the durations of the single cycles (111-114), and compensates for the duration of said treatment sequence, ensuring efficiency and food safety. Said Phase B provides a first Sub-phase b1) of check of the adequacy of said duration, from which a second Sub-phase b2) is alternatively subdivided into two cases:
- Sub-phase b2.1) if the duration is inadequate, that is to say, insufficient, a warning or alarm is provided in such a way as to warn the user to re-set said Phase A for the purpose of said adequacy;
- Sub-phase b2.2) if the duration is adequate, that is to say, in excess, depending on the planned treatment and collection, there is provided the compensation for the time remaining to the final collection by introducing a compensation period (115) for the optimal preservation of the food; and wherein, during this compensation period, depending on said collection, the food is kept at a temperature lower than or equal to 10°C, preferably close to +3°C. In more detail, said compensation period is automatically included in the sequence of cycles set by the user (111-114), as in said Phase A, before the last cycle planned (114) that corresponds to the collection conditions; said period (115), therefore, can be added as an additional cycle inside said sequence, or can be integrated in any of the planned cycles extending its duration, if it already envisages a temperature lower than or equal to +10°C. For example, it can be advantageous to integrate said compensation period in a cycle at a temperature lower than 0°C, like negative blast chilling, if provided.

In said Phase C (103) the control system automatically executes the compensated sequence of cycles, as explained above, in such a way that all the treatment cycles planned in said Phase A (111-114), also with said compensation period (115) as in said Phase B, are sequentially executed without user intervention and such that at the end of said Phase C the food is ready to be collected, at the set time and under the desired conditions.

In said Phase D (104) the user extracts from said multi-purpose apparatus the so treated food, which is ready for use; in particular, one should remember the frequent case of reconstitution to optimal conditions for serving at the table.

As a non-exhaustive example (Fig. 2), in an embodiment variant particularly suitable for the thermal treatment of a meat or fish portion in an operating range between -40°C and +85°C (126), four single cycles (111, 112, 113, 114) are provided, which are initially set by the user in said Phase A, wherein, before the final reconstitution, said compensation period (115) is then automatically included, at about +3°C, in such a way that upon collection said portion is ready to be used, at the set time and under the desired conditions, ensuring food safety.

In more detail, one provides in sequence (Fig. 2): a first defrosting cycle (111) carried out by operating steps, a second slow cooking cycle (112), which, too, is carried out by steps, a third blast chilling cycle (113) that rapidly brings the air of the cell (124) to a temperature close to -20°C to then gradually rise again in such a way as to bring the temperature at the core of the product (123) to +3°C, and finally a fourth and last reconstitution cycle (114) to the conditions of use in order to collect the food from the cell at a temperature of about 65°C in such a way that it is ready, for example, to be directly served at the table. Therefore, said control system of the multi-purpose apparatus checks the adequacy of the total duration and processes said sequence automatically including said compensation period (115) between the third positive blast chilling cycle (113) and the final reconstitution cycle (114). Substantially, in that case, a compensated sequence is obtained by extending positive blast chilling; it can be noted, in fact, that at the end of the said third cycle (113) the temperature at the core of the product (123) is close to +3°C, therefore, introducing said compensation period (115) immediately before the last reconstitution cycle (114) is here advantageous, efficient and safe.

In order to exemplify the above, it is possible to graphically represent by means of a two-dimensional diagram (Fig. 2), on Cartesian axes, the setting parameters and the actual execution of said compensated sequence (111-115), as experimentally detected; said execution diagram substantially corresponds to said Phase C (103) of the proposed method (10) and ends with the collection of the treated product, in such a way as to be ready for use, as in said Phase D (104). With particular reference to the represented axes, that is to say, the axis of duration (121), which is referred to time (T) in minutes, and the axis of temperature (122) (T) in degrees centigrade, the diagram shows the plot of the actual temperature detected at the core of the treated product (123), in addition to the plot of the programmed temperature (125) for the purpose of the treatment or set-point, as well as the plot of the actual temperature of air inside the cell (124). The variations in the set temperature (125), in the different cycles, are carried out progressively by steps, for the purpose of an effective and safe effect on the food; moreover, the continuous oscillations of the air temperature (124), in the cell, which are due to the thermostat, that is to say, to the continuous on-off of the apparatus, are represented. Furthermore, for the purpose of the invention, it should be noted that each cycle provides particular values of relative humidity (128) as well as particular values of the quantity of treated air, that is to say, of the parameter also known as speed (127). Such a diagram, for example, can be advantageously displayed in said display of the multi-purpose apparatus.

In more detail, in this embodiment variant (Fig. 2) it is provided that the first three cycles (111, 112, 113) are carried out gradually by setting the multi-purpose apparatus to at least two ranges (124, 125) per cycle, in such a way as to bring the temperature at the core of the food (123), considering a tolerance of +/- 20%, respectively:
- in the first cycle (111) from -20°C to +5°C with, in the cell, values of humidity (128) and speed (127) of 100%;
- in the second cycle (112) from +5°C to +75°C with, in the cell, values of humidity (128) of 60% and of speed (127) of 40%;
- in the third cycle (113) from +75°C to +3°C with, in the cell, values of speed (127) of 100% until said compensation period (115) wherein said speed is of 40%;
- in the fourth and last cycle (114) from +3°C to +65°C with, in the cell, values of humidity (128) of 80% and of speed (127) of 60%.

Therefore, in professional practice, it was found that the advantageous multi-cycle treatment method (10), proposed by the invention, provides kitchen operators or the operators of the food industry with any sequence of single treatments on food, for example between - 40°C and +85°C, being then compensated and executed automatically without user intervention in such a way as to facilitate professional practice, reducing the occasions of distraction and error, and ensuring greater food safety and quality.

### Reference

(10) multi-cycle treatment method for foodstuffs, otherwise known as multiple-cycle method or method with a sequence of cycles, which is the object of the present invention and is carried out by phases (Phase A, B, C, D);
(101) Phase A of initial setting of the sequence of cycles, comprising at least three single cycles, which are different from each other;
(102) Phase B of automatic control with compensation;
(103) Phase C of automatic execution;
(104) Phase D of final collection of the food;
(111) first single cycle of the multi-cycle treatment, or Cycle1;
(112) second single cycle of the multi-cycle treatment, or Cycle2;
(113) third single cycle of the multi-cycle treatment, or Cycle3;
(114) last cycle of the set sequence, intended to prepare the food to the conditions of use;
(115) compensation period, automatically included in the sequence;
(121) duration axis, or time axis;
(122) temperature axis;
(123) plot of the actual temperature at the core of the product;
(124) plot of the actual air temperature, in the cell;
(125) plot of the programmed temperature for the purpose of the treatment, or set-point;
(126) operating temperature range, that is to say, working range of the multi-purpose apparatus;
(127) quantity of treated air, that is to say, speed;
(128) relative humidity.

## Claims

1. Multi-cycle treatment method (10) for foodstuffs, otherwise known as multiple-cycle method or method with a sequence of cycles, which is automatically carried out in a treatment chamber or cell of a multi-purpose apparatus intended for the thermal treatment of food with temperature values at least between -40°C and +85°C, also adjusting humidity, and which makes the treated food ready for use, ensuring food safety; said multi-purpose apparatus being of the type comprising a first heating unit and a second cooling and refrigeration unit of said treatment chamber, and being provided with a control system with a logic unit for the management and the interaction of each of the functions of said first and second units in such a way as to enable in said treatment chamber, by controlling the degree of humidity as well, single treatment cycles such as: positive and negative blast chilling, retarder proving, defrosting, slow cooking, reconstitution; and wherein each of said cycles is programmable according to temperature, duration and humidity; said treatment method (10) being **characterised in that** it comprises: a Phase A (101) of initial setting of the desired multi-cycle treatment, a Phase B (102) of automatic control and compensation, a Phase C (103) of automatic execution, a Phase D (104) of final collection;
- and wherein in said Phase A (101), by acting on said control system of said multi-purpose apparatus, the user selects and if necessary configures at least three complete and different single cycles, concatenated in sequence, which are selected from the following six standard cycles: positive blast chilling to about +3°C, negative blast chilling to about -18°C, defrosting, retarder proving, slow cooking, reconstitution; said Phase A (101) comprising a Sub-phase a1) of setting of said sequence of cycles, with a selection of the first cycle (111) and optional setting, that is to say, customization, selection of the second cycle (112) and optional setting, selection of the third cycle (113) and optional setting, also with the selection and setting of the subsequent cycles, if provided, and wherein the last cycle set (114) ends at the time of the final collection; said Phase A (101) then comprising a Sub-phase a2) of setting of the date and time planned for said collection; said Phase A (101) finally comprising a Sub-phase a3) of start;
- and wherein in said Phase B (102) said control system, without user intervention, checks the sequence of cycles set in said Phase A (101) and introduces a compensation period (115) for the duration, that is to say, the time, remaining to collection, ensuring optimal preservation of the food; said Phase B (102) comprising a Sub-phase b1) of check of the adequacy of the total duration wherein, if said duration is inadequate, that is to say, insufficient, one passes to a Sub-phase b2.1), whereas, if said total duration is adequate, that is to say, in excess, one passes to a Sub-phase b2.2); and wherein said Sub-phase b2.1) provides a warning of non-adequacy requiring to re-set said Phase A; and wherein said Sub-phase b2.2) provides the processing of a compensated sequence in such a way that, in addition to the cycles set by the user (111-114) and before the last cycle (114), said compensation period (115), during which the food is kept at a temperature lower than or equal to 10°C, is automatically included;
- and wherein in said Phase C (103) said control system, without user intervention, executes said compensated sequence of the cycles in such a way that, at the end of the last cycle, the food is ready to be collected, at the set time and under the conditions of use;
- and wherein in said Phase D (104) the user extracts the so treated and ready-for-use food.

2. Multi-cycle treatment method (10) according to the previous claim, **characterised in that** each cycle (111-114) and said compensation period (115), too, are individually customizable by steps, that is to say, settable by regular steps; said setting being simultaneously dependent on duration, on temperature, which is between -40°C and +85°C, and/or on humidity, which is between 0% and 100%.

3. Multi-cycle treatment method (10) according to the previous claims, **characterised in that** said compensation period (115), alternatively, is added as an additional cycle or is integrated as an extension in one of the cycles selected in said phase A (101).

4. Multi-cycle treatment method (10) according to the previous claims, **characterised in that** during said compensation period (115) the food is kept at the temperature of +3°C, with a tolerance of +/- 20%.

5. Multi-cycle treatment method (10) according to the previous claims, **characterised in that** in an embodiment variant it is provided that in said Phase A (101) the following four standard cycles are set, in sequence: a first defrosting cycle (111), a second slow cooking cycle (112), a third positive blast chilling cycle (113), a fourth and last reconstitution cycle (114) to the conditions of use; and wherein said compensation period (115) is automatically included and carried out (102, 103) at the end of said third cycle (113), as an extension of positive blast chilling to the temperature of +3°C; and wherein at least the first three cycles (111, 112, 113) are carried out gradually by setting the multi-purpose apparatus to at least two ranges (124, 125) per cycle, in such a way as to bring the temperature at the core of the food (123), considering a tolerance of to +/- 20%, respectively:
• in the first cycle (111) from -20°C to +5°C with, in the cell, values of humidity (128) and speed (127) of 100%;
• in the second cycle (112) from +5°C to +75°C with, in the cell, values of humidity (128) of 60% and of speed (127) of 40%;
• in the third cycle (113) from +75°C to +3°C with, in the cell, values of speed (127) of 100% until said compensation period (115) wherein said speed is of 40%;
• in the fourth and last cycle (114) from +3°C to +65°C with, in the cell, values of humidity (128) of 80% and of speed (127) of 60%.
